## Europäisches Patentamt
## European Patent Office
## Office européen des brevets

(19)

(11) Veröffentlichungsnummer: **0 126 860**
**B1**

(12) **EUROPÄISCHE PATENTSCHRIFT**

(45) Veröffentlichungstag der Patentschrift:
**31.01.90**

(51) Int. Cl.⁴: **G 01 D 5/245**

(21) Anmeldenummer: **84102188.4**

(22) Anmeldetag: **01.03.84**

(54) **Vorrichtung zur digitalen Winkelmessung.**

(30) Priorität: **03.03.83 CH 1167/83**

(43) Veröffentlichungstag der Anmeldung:
**05.12.84 Patentblatt 84/49**

(45) Bekanntmachung des Hinweises auf die Patenterteilung:
**31.01.90 Patentblatt 90/5**

(84) Benannte Vertragsstaaten:
**DE FR**

(56) Entgegenhaltungen:
**EP-A- 0 040 359**
**DE-A- 2 023 677**
**DE-B- 1 208 087**

(73) Patentinhaber: **WILD LEITZ AG, CH-9435 Heerbrugg (CH)**

(72) Erfinder: **Stössel, Hans R., Wolkenberg, CH-9445 Rebstein (CH)**

(74) Vertreter: **EGLI-EUROPEAN PATENT ATTORNEYS, Horneggstrasse 4, CH-8008 Zürich (CH)**

## Beschreibung

Die vorliegende Erfindung betrifft eine Vorrichtung gemäß dem Oberbegriff des Patentanspruches 1.

Die Messung einer Phasendifferenz mit dieser Vorrichtung ergibt eine Interpolation des Teilungsintervalles (Feinmessung), während die im zu messenden Winkel enthaltene Anzahl ganze Teilungsintervalle noch unbekannt ist.

Bekannt sind Ausführungen, bei denen der Kreis neben der Teilung noch eine einzelne Marke (Nullmarke) aufweist, welche durch je einen zusätzlichen statorfesten und rotorfesten Geber abgetastet wird. Die noch unbekannte Anzahl ganzer Intervalle (Grobmessung) erhält man, indem zwischen aufeinanderfolgenden Durchgängen der Nullmarke am statorfesten und rotorfesten Markengeber die Signalperioden eines Teilungsgebers gezählt werden. Ferner sind Lösungen bekannt, bei denen die Nullmarke in die Teilung integriert und durch Auslassen eines Teilstriches realisiert ist. Dadurch spart man die zusätzlichen Markengeber ein. Dagegen muß zusätzlicher Aufwand getrieben werden, um für die Feinmessung die fehlende Signalperiode zu rekonstruieren.

Für die Grobmessung muß die Nullmarke am statorfesten und rotorfesten Geber je einmal erscheinen. Das erfordert eine Beobachtungsdauer, die im ungünstigsten Fall eine volle Umdrehung des Kreises beträgt. In gewissen Anwendungsfällen stört dies. Bei einem theodolitartigen Instrument z. B. müssen mit derselben Auswerteelektronik abwechselnd zwei Winkel um verschiedene Achsen (Azimut und Elevation) gemessen werden. Bei Absteckarbeiten sollte dies in schneller Folge geschehen (etwa 2 bis 4 komplette Messungen pro Sek.). Hier entsteht der Wunsch, eine Grobinformation bereits aus einem Bruchteil einer vollen Kreisumdrehung zu erhalten.

Aufgabe der Erfindung ist es, diesen Wunsch zu erfüllen sowie den oben erwähnten zusätzlichen Aufwand wesentlich zu reduzieren. Diese genannten Schwierigkeiten werden dadurch umgangen, daß die Marke nicht durch Auslassen eines Striches, sondern nur durch eine Störung der Strichbreite realisiert ist, und zwar so, daß die eine Kante aller Teilstriche nach wie vor eine über den ganzen Kreis ungestörte aequidistante Teilung darstellt, die zur Phasenmessung dient, während die Markenstörung nur in einer Verschiebung der anderen Kante besteht. Als besonders vorteilhaft hat es sich erwiesen, als Strichbreite des ungestörten oder gestörten Striches etwa 2/3 bzw. 1/3 des Teilungsintervalles zu wählen.

Die Gewinnung der Grobinformation wird erfindungsgemäß durch Anbringen von N aequidistanten Marken gelöst, wobei N mit Vorteil eine Zweierpotenz ist:

$$N = 2^n.$$

Wenn n > 1 ist, müssen die Marken gekennzeichnet (codiert) sein. In einer ersten Ausführungsform der Erfindung erreicht man dies dadurch, daß man als Marken Gruppen von n+1 aufeinanderfolgenden Teilstrichen verwendet, wobei der erste Strich immer gestört ist, während die Zustände der n folgenden einen binären Code darstellen, der die Marke nummeriert.

In einer zweiten Ausführungsform der Erfindung besteht jede Marke aus zwei aufeinanderfolgenden Strichen, von denen der erste immer gestört ist, während der Zustand des zweiten ein Codebit darstellt. Die Codebits aller Marken bilden einen zyklischen Code, der so beschaffen ist, daß beliebige n aufeinanderfolgende Codebits ein auf dem Kreis einmaliges Wort bilden.

Solche Codes für verschiedene n sind bekannt. Sie können z.B. mit Schiebezählern (geeignete rückgekoppelte Schieberegister) erzeugt werden. So erzeugt man mit einem 6-Bit-Schieberegister und der Rückkuppelungsregel

$$B(i) = B(i-5) \text{ XOR } B(i-6)$$

die folgende Bitfolge der Zykluslänge $63 = 2^6 - 1$:

LLLLLL00000L0000LL000L0L00LLLL0L-
000LLL00L00L0LL0LLL0LL00LL0L0L0

Darin kommt jedes mögliche 6-Bit-Wort genau einmal vor, mit Ausnahme von 000000. Man darf aber bei der Gruppe 00000 eine sechste 0 hinzufügen. Es stört bei der vorliegenden Anwendung nicht, daß dann der Schiebezähler nach 000000 nicht mehr weiterlaufen würde.

## Patentansprüche

1. Vorrichtung zur digitalen Messung eines Winkels, dessen Schenkel durch zwei um eine Achse gegeneinander drehbare Teile, einen Stator und einen Rotor definiert sind, mittels eines mit konstanter Winkelgeschwindigkeit um dieselbe Achse rotierenden geteilten Kreises, sowie je mittels eines oder mehreren statorfest bzw. rotorfest angeordneten Gebern zur Abtastung der Teilung des rotierenden geteilten Kreises, wobei an den Geberausgängen eines oder mehrere Wechselspannungssignalpaare anfallen, deren Phasendifferenz sich um $2\pi$ ändert, wenn der Rotor gegenüber dem Stator um ein Teilungsintervall bewegt wird, wobei die Teilung eine oder mehrere Marken in Form von Störungen der Teilung enthält, so daß sich aus der Zeit zwischen dem Durchgang einer Marke an einem statorfesten und einem rotorfesten Geber die Anzahl der im zu messenden Winkel enthaltenen ganzen Teilungsintervalle ermitteln läßt, dadurch gekennzeichnet, daß eine Kante der Teilstriche eine über den ganzen Kreis ungestörte aequidistante Teilung darstellt, während die Markenstörung nur in einer Verschiebung der anderen Kante der Teilstriche besteht.

2. Vorrichtung nach Patentanspruch 1, dadurch gekennzeichnet, daß die eine Kante der Teilstriche durch die bei gegebener Drehrichtung des Kreises ansteigende Signalflanken erzeugende Kante definiert ist.

3. Vorrichtung nach Patentanspruch 1, dadurch gekennzeichnet, daß die Breite des ungestörten Teilstriches etwa 2/3 des Teilungsintervalles beträgt, während die Störung aus einem Strich besteht, der nur etwa 1/3 Intervall breit ist.

4. Vorrichtung nach Patentanspruch 1, dadurch gekennzeichnet, daß $2^n$ Marken aequidistant auf

dem Kreis angeordnet sind, wobei jede Marke aus n+1 aufeinanderfolgenden Teilstrichen besteht, deren erster immer gestört ist, während die Zustände der n folgenden eine binäre Codierung der Marke darstellen.

5. Vorrichtung nach Patentanspruch 1, dadurch gekennzeichnet, daß $2^n$ Marken aequidistant auf dem Kreis angeordnet sind, von denen jede aus zwei Strichen besteht, deren erster immer gestört ist, während der Zustand des zweiten ein Codebit darstellt und so gewählt ist, daß die Codebits aller Marken einen zyklischen Code bilden und somit n aufeinanderfolgende Codebits eine eindeutige Kennzeichnung der absoluten Lage auf dem Kreis darstellen.

## Claims

1. A device for the digital measurement of an angle whose sides are defined by two parts rotatable in respect of each other about an axis, a stator and a rotor, by means of a graduated circle which rotates at a constant angular speed about the same axis and also by means of one or more sensors each time fixedly arranged with respect to the stator and the rotor, respectively, for scanning the graduation of the rotating graduated circle, one or more pairs of alternating voltage signals appearing at the outputs of the sensors, their phase difference changing by $2\pi$ when the rotor is displaced with respect to the stator by an interval of the graduation, the graduation comprising one or more marks in form of disturbances of the graduation, so that from the time separating the passage of a mark in front of a sensor fixed with respect to the stator and in front of a sensor fixed with respect to the rotor there can be inferred the number of integral intervals of the graduation contained in the angle to be measured, characterized in that one edge of the graduation lines represents over the whole circle a graduation having an undisturbed division while the disturbance by a mark only consists in a displacement of the other edge of the graduation lines.

2. A device according to claim 1, characterized in that one edge of the graduation lines is defined by the edge which generates raising signal flanks for a given sense of rotation of the circle.

3. A device according to claim 1, characterized in that the width of an undisturbed graduation line represents about 2/3 of the graduation interval while the disturbance is represented by a line whose width only is about 1/3 of the interval.

4. A device according to claim 1, characterized in that $2^n$ equidistant marks are arranged at the circle, each mark consisting of n+1 consecutive graduation lines of which the first one always is disturbed while the states of the n following lines represent a binary coding of the mark.

5. A device according to claim 1, characterized in that $2^n$ equidistant marks are arranged at the circle, each mark consisting of two lines of which the first one always is disturbed while the state of the second one represents a coding bit chosen in such manner that the coding bits of all marks form a cyclic code and thus consecutive n coding bits are representative of an unequivocal characterization of the absolute position on the circle.

## Revendications

1. Dispositif de mesure numérique d'un angle dont les côtés sont définis par deux pièces, un stator et un rotor, qui peuvent tourner l'une par rapport à l'autre autour d'un axe, au moyen d'un cercle gradué tournant à vitesse angulaire constante autour du même axe ainsi que d'une ou plusieurs sondes disposées de façon fixe par rapport au stator respectivement au rotor pour analyser la graduation du cercle gradué tournant, une ou plusieurs paires de signaux de tension alternative apparaissant aux sorties des sondes, leur différence de phase changeant de $2\pi$ lorsque le rotor se déplace d'un intervalle de la graduation par rapport au stator, la graduation comportant une ou plusieurs marques sous forme de perturbations de la graduation, de sorte que du temps qui sépare le passage d'une marque devant une sonde fixe par rapport au stator et devant une sonde fixe par rapport au rotor on peut déduire le nombre des intervalles entiers de la graduation contenus dans l'angle à mesurer, caractérisé en ce qu'un bord des traits de la graduation représente sur l'ensemble du cercle une graduation à division non perturbée tandis que la perturbation par une marque ne consiste qu'en un déplacement de l'autre bord des traits de la graduation.

2. Dispositif selon la revendication 1, caractérisé en ce que l'un des bords des traits de la graduation est défini par le bord qui pour un sens de rotation donné du cercle engendre des flancs de signaux ascendants.

3. Dispositif selon la revendication 1, caractérisé en ce que la largeur d'un trait non perturbé de la graduation représente environ 2/3 de l'intervalle de graduation tandis que la perturbation est représentée par un trait qui n'est large que d'environ 1/3 de l'intervalle.

4. Dispositif selon la revendication 1, caractérisé en ce que sur le cercle sont disposées $2^n$ marques équidistantes, chaque marque étant constituée de n+1 traits consécutifs de la graduation dont le premier est toujours perturbé tandis que les états des n traits suivants représentent un codage binaire de la marque.

5. Dispositif selon la revendication 1, caractérisé en ce que sur le cercle sont disposées $2^n$ marques équidistantes dont chacune est constituée de deux traits dont le premier est toujours perturbé tandis que l'état du deuxième représente un bit de codage choisi de façon que les bits de codage de toutes les marques forment un code cyclique et qu'ainsi n bits de codage successifs représentent une caractérisation univoque de la position absolue sur le cercle.